## Europäisches Patentamt

## European Patent Office

## Office européen des brevets

(19)

(11) Veröffentlichungsnummer: **0 232 276**
**B1**

(12)

# EUROPÄISCHE PATENTSCHRIFT

(45) Veröffentlichungstag der Patentschrift:
**07.12.88**

(51) Int. Cl.⁴: **A 61 C 3/16**

(21) Anmeldenummer: **85905797.8**

(22) Anmeldetag: **30.10.85**

(86) Internationale Anmeldenummer:
**PCT/EP 85/00577**

(87) Internationale Veröffentlichungsnummer:
**WO 87/02573 (07.05.87 Gazette 87/10)**

(54) **VORRICHTUNG ZUM ENTFERNEN VON KRONEN, BRÜCKEN O. DGL. VON ZAHNSTÜMPFEN.**

(43) Veröffentlichungstag der Anmeldung:
**19.08.87 Patentblatt 87/34**

(45) Bekanntmachung des Hinweises auf die Patenterteilung:
**07.12.88 Patentblatt 88/49**

(84) Benannte Vertragsstaaten:
**AT FR**

(56) Entgegenhaltungen:
**DE-A- 2 747 521**
**DE-A- 3 417 067**
**FR-A- 2 204 966**
**US-A- 2 337 971**
**US-A- 3 690 007**
**US-A- 4 300 885**

(73) Patentinhaber: **PLANERT, Jens, Friedhofsweg 1,**
**D-3402 Dransfeld (DE)**

(72) Erfinder: **PLANERT, Jens, Friedhofsweg 1,**
**D-3402 Dransfeld (DE)**

(74) Vertreter: **Patentanwälte Dipl.-Ing. Rudolf Bibrach**
**Dipl.-Ing. Elmar Rehberg, Postfach 1453 Pütterweg 6,**
**D-3400 Göttingen (DE)**

**Beschreibung**

Die Erfindung bezieht sich auf eine Vorrichtung mit den Merkmalen des Oberbegriffes des Anspruches 1. Die Vorrichtung dient somit zum Entfernen von Kronen, Overlays, Brücken usw., die mit Befestigungszement auf einem oder mehreren Zahnstümpfen befestigt sind.

Aus der US-A-3 889 376 ist eine Vorrichtung dieser Art bekannt. In einem Abzugsrahmen sind zwei gegenüberliegend angeordnete Haltebacken vorgesehen, die zum Angriff an der Mantelfläche der Krone, Brücke oder dgl. ausgebildet und bestimmt sind und mit deren Hilfe auf schonende Weise die Krone vom Zahnstumpf entfernt werden kann. Die Vorrichtung weist auch eine Einrichtung zum Aufbringen einer entgegen der Einschubrichtung wirksamen Abzugskraft auf den Abzugsrahmen auf, die aus einer die Haltebacken überspannenden Brücke und einer in einem Muttergewinde der Brücke verdrehbaren Schraube besteht. Zum Abziehen der Krone ist es erforderlich, diese zunächst zu durchbohren, damit sich die Schraube auf dem Zahnstumpf bei Aufbringung der Abzugskraft abstützen kann. Damit ist die Krone verletzt und steht für eine Wiederverwendung nicht zur Verfügung. Die Haltebacken bestehen zumindest teilweise aus einem schnell aushärtbaren Kunststoff, der sich der Oberflächenform der Krone anpasst.

Aus der Zeitschrift «ZWR» 1980, Nr. 11 S. 66, ist eine Vorrichtung bekannt, bei der in einem Abzugsrahmen zwei um parallele Schwenkachsen aufgehängte Haltebacken vorgesehen sind, die gegeneinander bzw. voneinander weg verschwenkt werden können. Der Einsatz dieser Vorrichtung setzt voraus, dass die Haltebacken unter einen überstehenden Rand der Krone fassen bzw. dort angesetzt werden können. Im übrigen kann die Beweglichkeit der Haltebacken durch eine Mutter beseitigt bzw. festgestellt werden, so dass sich die Haltebacken von der abzuziehenden Krone damit nicht mehr lösen können. Zur Anwendung dieses Gerätes muss auch hier in die Kaufläche der Brücke ein Loch gebohrt werden, durch welches sich eine Spindel auf dem Zahnstumpf abstützen kann. Die Spindel ist in dem Abzugsrahmen mit Hilfe eines Gewindes gelagert. Eine Art Knarrenschlüssel dient dazu, die erforderliche Abzugskraft aufzubringen. Dies geschieht durch Verdrehen der Spindel relativ zum Abzugsrahmen. Die Kraftentwicklung erfolgt über das Gewinde ebenfalls sehr langsam, was nachteilig ist, denn es kommt beim Loslösen der Kronen nur darauf an, den Befestigungszement aufzubrechen bzw. die Haltekraft dieses Befestigungszementes zu überschreiten. Im seitlichen Mundbereich ist die bekannte Vorrichtung oft nicht mehr anwendbar, weil der Knarrenschlüssel, aufgesteckt auf die Spindel eine erhebliche Höhe voraussetzt. Ausserdem muss der erforderliche Weg für die Drehung des Knarrenschlüssels vorhanden sein. Die Haltebacken sind in verschiedenen Ausführungen vorgesehen und sollen somit eine Anpassung an unterschiedliche Kronen, Brücken oder dgl. gestatten. Dieses bekannte Gerät setzt voraus, dass die Krone einen überstehenden Rand aufweist, also anders ausgebildet ist, als dies in der modernen Zahnmedizin gefordert wird. Im Falle der bis unter den Zahnfleischrand präparierten Zahnstümpfe muss, insbesondere zum Ansatz der Haltebacken, das Zahnfleisch verdrängt werden. Hierunter leidet vor allem die Zahnhalsmanschette mit ihren Fasern, was langfristig letztendlich zum Verlust des Zahnstumpfes führen kann. Das bekannte Gerät besitzt jedoch den Vorteil, dass die einwirkende Kraft bereits entgegengerichtet zur Einschubrichtung der Krone, der Brücke oder dgl. angewendet werden kann, vorausgesetzt, dass die Haltebacken einen Ansatz in einer der Einschubrichtung entsprechenden Stelle bzw. Winkellage gestatten.

Ein anderes bekanntes Gerät gemäss der US-A-3 690 007 besteht im wesentlichen aus zwei schwenkbar aneinander angelenkten Haltebacken, so dass es möglich ist, diese Haltebacken gegenüber an der Brücke oder zwischen zwei Zahnstümpfen, die von der Brücke überbrückt werden, anzusetzen. In der Ansatzposition kann die Beweglichkeit der Haltebacken durch eine Schraube eingeschränkt bzw. blockiert werden. In einem der Haltebacken ist eine Durchbrechung vorgesehen, in die ein konventioneller Kronenentferner, insbesondere in der als Hirtenstab bekannten Ausführung, eingesetzt werden kann. Durch Schläge mit einem Hammer auf das andere Ende des Hirtenstabes kann dann versucht werden, die Krone, Brücke oder dgl. zu entfernen. Als Hammer kann auch ein auf dem Hirtenstab gleitend gelagertes Gewicht benutzt werden. Diese Geräte sind im distalen Bereich nicht einsetzbar. Auch bedarf es einer beachtlichen Geschicklichkeit bei ihrer Anwendung. Trotzdem besteht die Gefahr, dass die einwirkende Kraft nicht entgegengesetzt zur Einschubrichtung der Brücke an dieser angreift. Allerdings ist durch die Verwendung eines Hammers eine kurzzeitige Krafteinwirkung erzielbar, wie sie für das Überschreiten der Festigkeit des Befestigungszementes durchaus sinnvoll ist.

Konventionelle Kronenentferner, insbesondere in der als Hirtenstab bekannten Ausführung, besitzen verschiedene Formgestaltung. In aller Regel ist der Hirtenstab ein etwa 25 cm langer Stab, der an seinem einen Ende eine kleine spatenförmige abgewinkelte Spitze trägt. Mit dieser Spitze versucht man unter Kronenränder, Entfernungsknöpfe, Brückenzwischenglieder und andere Retentionsgebiete zu fassen, was eine entsprechende Ausbildung der Kronen, Brücken oder dgl. voraussetzt. Das andere Ende des Hirtenstabes ist so geformt, dass mit einem Bleihammer ein Schlag in Abzugsrichtung ausgeübt werden kann. Zur sicheren Anwendung des Hirtenstabes muss die Arbeitsweise vom Behandler mit der einen Hand gesichert werden; mit der anderen Hand bildet er eine Führung und ein Widerlager. Die Helferin, ohne die diese Arbeit meist nicht durchgeführt werden kann, löst dann mit Hilfe des Hammers die notwendige Schlagkraft aus. Dabei tritt eine starke Dämpfung des Schlages durch die Hände des Behandlers und die konstruktionsbedingte Elastizität des Hirtenstabes auf. Somit wird die steil ansteigende Impulsflanke des Schlages, die wichtig für das Zerreissen des Befestigungszementes wäre, in nachteiliger Weise abgedämpft. Da der Bleihammer eine relativ grosse Masse aufweist, die in ungünstigem Verhältnis zu der relativ kleinen Masse des Zahnersatzes steht, wird mit dem Schlag eine Krafteinwirkung herbeigeführt, die zu lange auf das Zahnersatzteil einwirkt, Da der Hirtenstab immer nur einseitig angreifen kann, ist eine Einwirkung der Kraft entgegen der Einschubrichtung unmöglich. Durch das Hintergreifen der Ränder des Zahnersatzes besteht die Gefahr, dass der Zahnersatz im Randbereich verzogen wird, dass z.B. Verblendungen abplatzen, so dass der Zahnersatz für eine Wiederverwendung — jedenfalls ohne entsprechende Reparatur — nicht mehr zur Verfügung steht. Frakturen von Stumpfaufbauten und/oder des Zahnmaterials, speziell bei wurzelgefüllten Zähnen, kommen ebenfalls vor. Durch den zeitlichen Verlauf der Abzugskräfte werden die Haltefasern des Parodonts im plastischen Bereich in nachteiliger Weise verformt. Zusätzlich besteht eine Verletzungsgefahr durch die scharfen Kanten des Ansatzstückes des Hirtenstabes. Auch der Kronenrand, da dieser immer individuelle Form aufweist, wird häufig beschädigt.

Weiterhin sind Kronenentfernungszangen bekannt, z.B. aus der US-A-3 834 026, die gegenüber den Extraktionszangen etwas modifiziert sind. Die Anwendung derartiger Zangen erbringt den Nachteil, dass mit der Zange ein entsprechend langer Hebelarm vorliegt und die ausgelöste Kraft lang anhaltend einwirkt. Dabei wird häufig nicht nur eine axiale Kraft, sondern auch ein tordierendes Moment auf den Zahnersatz ausgeübt. Bei extremer Anwendung in diesem Sinne besteht die Gefahr, dass häufig der Zahnstumpf unbeabsichtigt mitherausgezogen wird.

Aus der US-A-4 300 885 ist eine Vorrichtung zum Entfernen von Kronen bekannt, deren Einrichtung zum Aufbringen der Abzugskraft ein beweglich gelagertes Massegeschoss, das in einer geradlinigen Bewegungsbahn geführt und von einer auslösbaren Kraftquelle beaufschlagt ist, und am Ende der Bewegungsbahn einen Amboss aufweist. Der Amboss ist Bestandteil des Gehäuses, in welchem das Massegeschoss in einer Zwischenhülse verschiebbar gelagert ist. Mit der Zwischenhülse ist eine Stange verbunden, an deren freien Ende ein Haken angeordnet ist, wie dies an sich von einem Hirtenstab bekannt ist. Die Bewegungsenergie des Massegeschosses wird über eine Feder gedämpft und der gesamten Vorrichtung auf die Zwischenhülse und letztlich auf dem Stab mit dem Haken übertragen, so dass eine steile Impulsflanke nicht erzielbar ist. Ausserdem gestattet es der Haken nur, seitlich unter den Rand einer Krone zu greifen, so dass die Krafteinwirkung in keinem Fall entgegengesetzt zu der Einschubrichtung der Krone auf dem Zahnstumpf sein kann. Da das gesamte Gerät etwa eine Grösse von 10 cm aufweist, ergeben sich weitere Schwierigkeiten bei der Entfernung distal endständiger Kronen, so dass hier die Gefahr besteht, dass durch eine Kippbewegung des asymmetrischen Kraftangriffs nicht nur die Krone, sondern auch der Zahnstumpf unbeabsichtigt entfernt wird.

Die FR-A-2 204 966 zeigt eine ähnliche Vorrichtung zum Entfernen von Kronen, wobei Druckluft über ein Ventil dazu benutzt wird, um einen Kolben entgegen der Kraft einer Feder auf einem Amboss zu bewegen und damit eine entsprechende gedämpfte Kraft auf einen Stab, an dessen freiem Ende sich ein Haken befindet, zu übertragen. Auch dieses Gerät ist, ganz abgesehen von seinem Druckluftanschluss, entsprechend gross ausgebildet und kann mit dem Haken des Stabs nur seitlich am Rand einer Krone angesetzt werden, so dass die Krafteinwirkung auf keinen Fall entgegengesetzt zu der Einschubrichtung einer Krone auf den Zahnstumpf erfolgen kann. Auch hier erfolgt der Kraftangriff exzentrisch, einseitig und zudem noch in gedämpfter Weise, so dass die Gefahr besteht, dass auch hier der Zahnstumpf mitsamt der Krone unbeabsichtigt entfernt wird.

Der Erfindung liegt die Aufgabe zugrunde, eine Vorrichtung der eingangs beschriebenen Art aufzuzeigen, mit der es möglich ist, Kronen, Brücken und anderen Zahnersatz unter Zerstörung des Befestigungszementes von Zahnstümpfen zu entfernen, und zwar durch eine kurzzeitig und entgegen der Einschubrichtung des Zahnersatzes einwirkenden Schlagkraft. Dabei soll weder der Zahnstumpf noch das abzuziehende Zahnersatzteil beschädigt werden, so dass sie für eine Wiederverwendung wieder zur Verfügung stehen.

Inbesondere geht es darum, durch einen kurzen und starken Impuls den Film des Befestigungszementes zu zerreissen, ohne anhaltenden Zug auf die Haltefasern des Parodonts auszuüben. Weiterhin soll die Vorrichtung so klein bauen, das mit ihr auch distal endständige Kronen entfernt werden können.

Erfindungsgemäss wird dies dadurch erreicht, dass die Einrichtung zum Aufbringen der Abzugskraft ein beweglich gelagertes Massegeschoss aufweist, dass das Massegeschoss in einer Bewegungsbahn geführt ist, die zumindest an ihrem Ende, an dem das Massegeschoss auf einen dort vorgesehenen Amboss auftrifft, in einer Richtung entgegen der Einschubrichtung verläuft, dass das Massegeschoss von einer auslösbaren Kraftquelle beaufschlagt ist und dass der Amboss mit dem Abzugsrahmen und den Haltebacken verbunden ist. Das Massegeschoss, welches auch als Schlagbolzen bezeichnet werden kann, weist eine relativ geringe Masse auf, die zu der Masse des abzuziehenden Zahnersatzteils in einem günstigen Verhältnis steht. Das Massegeschoss benötigt nur eine relativ kleine Bewegungsbahn, in welcher es geführt ist. Die Bewegungsbahn muss entgegengesetzt zu der Einschubrichtung, mit der die Krone auf den Zahnersatz aufgesetzt ist, enden, kann natürlich auch über ihre ganze Länge parallel zu der Einschubrichtung vorgesehen sein. Am Ende der Bewegungsbahn ist ein Amboss erforderlich, auf den das Massegeschoss auftrifft, wobei es seine kinetische Energie schlagartig auf den Amboss und damit auf den Abzugsrahmen und die Haltebacken übertägt. Eine Dämpfung in der Übertragung dieses Impulses ist bewusst nicht vorgesehen, weil es darauf ankommt, die Haltekraft des Films des Befestigungszementes zu zerstören, ohne den Zahnstumpf zu kippen oder zu verdrehen. Da das Zahnersatzteil während der Abzugsbewegung praktisch nicht verformt und auch nicht beschädigt wird, steht es damit vorteilhaft für eine Wiederverwendung zur Verfügung. Durch die Verwendung des Massegeschosses ist sichergestellt, dass die Abzugskraft nicht länger als nötig auf das Zahnersatzteil einwirkt.

Die Einwirkung geschieht in der richtigen Richtung, so dass eine Verbiegung einer Brücke oder dgl. nicht auftritt. Die Verletzungsgefahr für die Mundhöhle des Patienten ist damit ebenfalls ausgeschlossen. Der zeitliche Velauf der Krafteinwirkung entspricht der Physiologie des Halteapparates insofern, als ein kurzer, starker Impuls den Film des Befestigungszementes zerreist, ohne dass ein anhaltender Zug auf die Haltefasern ausgeübt wird. Gleichzeitig wird damit die Schmerzempfindung des Patienten quantitativ und zeitlich besonders klein gehalten. Überraschenderweise bietet die erfindungsgemässe Vorrichtung die Möglichkeit, auch einen Zahnersatz abzuziehen, der eine keramische oder auch eine Kunststoffverblendung aufweist. Die Vorrichtung kann mit Vorteil so klein konstruiert werden, dass auch distal endständige Kronen etc. mit ihr entfernt werden können.

Die Kraftquelle kann hinsichtlich der Beschleunigung des Massegeschosses einstellbar ausgebildet sein, so dass die Möglichkeit besteht, die Geschicklichkeit des Zahnarztes auszunutzen und die Kraftquelle jeweils nur so stark einzustellen, wie dies für ein sicheres Abziehen des Zahnersatzes tatsächlich erforderlich ist. Damit wird der Halteapparat des Zahnstumpfes erheblich geschont.

Das Massegeschoss kann einen Bolzen mit einem angeformten Kopf aufweisen, der geradlinig entgegen der Einschubrichtung in einem Gehäuse geführt und auf der als mechanischer Feder ausgebildeten Kraftquelle abgestützt ist. Es ist ein Auslöser zur Freigabe der Kraftquelle auf dem Bolzen vorgesehen. Der Amboss besteht aus einem, den Bolzen umgebenden Rand des Gehäuses, auf dem der Kopf des Bolzens am Ende seiner Bewegungsbahn aufprallt. Damit ist es möglich, in einer sehr klein bauenden Vorrichtung das Massegeschoss so unterzubringen, dass der von ihm abgegebene Impuls mittig auf den Abzugsrahmen, und zwar entgegengesetzt zur Einschubrichtung des Zahnersatzteils einwirkt. Ein Verbiegen des Zahnersatzes ist damit ausgeschlossen. Als Kraftquelle kann vorzugsweise eine oder mehrere Tellerfedern, insbesondere in der üblichen Paketanordnung, Verwendung finden, die bei kleinem Federweg eine erhebliche Kraft aufzubringen in der Lage sind. Das Massegeschoss wird beim Auslösen damit in beachtlicher Weise beschleunigt, so dass die Führungsbahn relativ kurz gehalten werden kann, was für die Anwendung im distal endständigen Bereich wesentlich ist. Diese Ausbildung gestattet selbstverständlich auch die individuelle Einstellung der Vorspannung des Paketes von Tellerfedern so, wie es für den jeweiligen Anwendungsfall als sinnvoll und ausreichend angesehen wird. Zu diesem Zweck kann das Gehäuse auch eine Markierung tragen, so dass die Zusammendrückung der Tellerfedern in unterschiedlichem Ausmass und somit die Vorspannung für die Abgabe des jeweiligen Impulses reproduzierbar einstellbar ist. Zu diesem Zweck kann der Bolzen einen Gewindeschaft und eine zugehörige Mutter zur Einstellung der Vorspannung der Kraftquelle aufweisen, wobei sich die Mutter auf den Tellerfedern abstützt und andererseits die Tellerfedern sich wiederum am Gehäuse der Vorrichtung abstützen.

Der Bolzen kann eine umlaufende Nut aufweisen, in die der als Schieber ausgebildete Auslöser eingreift. Durch die Zusammendrückung der als Feder ausgebildeten Kraftquelle gelangt die Nut in den Bereich des Auslösers, so dass dieser in die Nut eingeschoben werden kann und somit den Eintritt der Bewegung des Bolzens verhindert. Der Auslöser kann über Zug oder Druck nach Art eines Bowderzuges oder auch ähnlich wie bei einem Auslöser eines Fotoapparates derart bewegt werden, dass er aus der Nut austritt und diese freigibt, so dass das Massegeschoss durch die Kraftquelle entsprechend beschleunigt wird und am Ende der Beschleunigungsbahn die jeweilige Kraft impulsartig übertragen wird. Anstelle der umlaufenden Nut am Bolzen kann der Auslöser natürlich auch am Kopf des Bolzens angreifen.

Der die Haltebacken tragende Abzugsrahmen und das Gehäuse der Einrichtung zum Aufbringen der Abzugskraft können als getrennte Teile miteinander verbindbar sein. Dabei besteht nicht nur die Möglichkeit, die Haltebacken jeweils unterschiedlich auszubilden, sondern auch die Möglichkeit, die Einrichtung zum Aufbringen der Abzugskraft unterschiedlich auszubilden, beispielsweise in der Weise, dass eine erste Einrichtung mit Tellerfedern in einem ersten bestimmten Vorspannbereich und eine zweite Einrichtung mit Tellerfedern in einem zweiten daran anschliessenden Vorspannbereich vorgesehen sind. Damit sind die verschiedenen Kombinationen der Bestandteile der Vorrichtung ohne weiteres möglich, wie dies für den jeweiligen Anwendungsfall sinnvoll und erforderlich erscheint. Es besteht auch die Möglichkeit, den die Haltebacken tragenden Abzugsrahmen verschieden breit auszubilden, oder eine verschiedene Formgebung der Haltebacken jeweils zu verwirklichen, um eine bessere Anpassung an das jeweilige Zahnersatzteil zu erzielen. In allen Fällen ist es erforderlich, dass die Haltebacken an der Mantelfläche der Krone, Brücke oder dgl. angreifen. Die Haltebacken können auch so ausgebildet bzw. angeordnet sein, dass sie im einen Falle von zwei gegenüberliegenden Seiten nur an dem einem Zahn zugeordneten Bereich am Zahnersatz angreifen. Wenn der Abzugsrahmen breiter ausgebildet ist, können beispielsweise vier oder sechs Haltebacken, jeweils paarweise aneinander gegenüberliegend angeordnet, oder auch durchgehende Haltebacken vorgesehen sein, was insbesondere für den Abzug einer sich über mehrere Zahnstümpfe erstreckenden Brücke vorteilhaft ist. Dann ist es auch möglich, nur eine oder auch mehrere Einrichtungen zum Aufbringen der Abzugskraft verteilt über die Länge des Abzugsrahmens so anzuordnen und diese Einrichtungen auch gemeinsam auszulösen, dass die Brücke über ihre gesamte Länge gleichzeitig abgehoben wird. Die beschriebene Ausbildung bietet den weiteren Vorteil, dass auf die Einstellbarkeit der Kraftquelle verzichtet werden kann und statt dessen eine gestufte Reihe von Einrichtungen zum Aufbringen einer jeweils konstanten Abzugskraft zur Verfügung zu stellen, die dann jeweils ausgewählt zum Einsatz kommt.

Eine andere konstruktive Ausführungsmöglichkeit der Vorrichtung besteht darin, dass das Massegeschoss als Kugel ausgebildet ist, die in einer pfeifenartigen Bewegungsbahn geführt und von Druckluft als Kraftquelle angetrieben ist. Der Amboss weist dabei einen am Ende der Bewegungsbahn angeordneten Steg auf. Durch Einleitung von Druckluft in die Bewegungsbahn wird die Kugel im Bereich der Bewegungsbahn beschleunigt. Am Ende der Bewegungsbahn trifft sie auf einen Steg am Abzugsrahmen auf, der so ausgebildet ist, dass die von der Kugel verdrängte Luft entweichen kann. Der Steg überträgt den Schlagimpuls auf den Abzugsrahmen und dieser wiederum auf die Haltebacken. Die Bewegungsbahn ist hierbei vergleichsweise länger ausgebildet und vorzugsweise gekrümmt pfeifenartig so verlegt, dass das Ende entgegengesetzt zur Einschubrichtung liegt. Auch damit ist gewährleistet, dass die Kraft wiederum entgegengesetzt zur Einschubrichtung auf den Abzugsrahmen übertragen wird. Der Auslöser wird hier in Form eines Ventils verwirklicht, welches der Einleitung der Druckluft in die Bewegungsbahn, die als gekrümmtes Rohr ausgebildet ist, dient. Auch dabei ist eine verschiedene Dosierung und somit eine Einstellbarkeit der einwirkenden Druckluft bzw. Kraft möglich.

Die Erfindung wird anhand einiger Ausführungsbeispiele weiter beschrieben. Es zeigen:

Fig. 1 einen Vertikalschnitt durch die Vorrichtung in einer ersten Ausführungsform,

Fig. 2 einen vertikalen Schnitt durch die Vorrichtung in einer zweiten Ausführungsform,

Fig. 3 eine Schnittdarstellung der wesentlichen Teile einer dritten Ausführungsform und

Fig. 4 einen Schnitt gemäss der Linie IV-IV in Fig. 3.

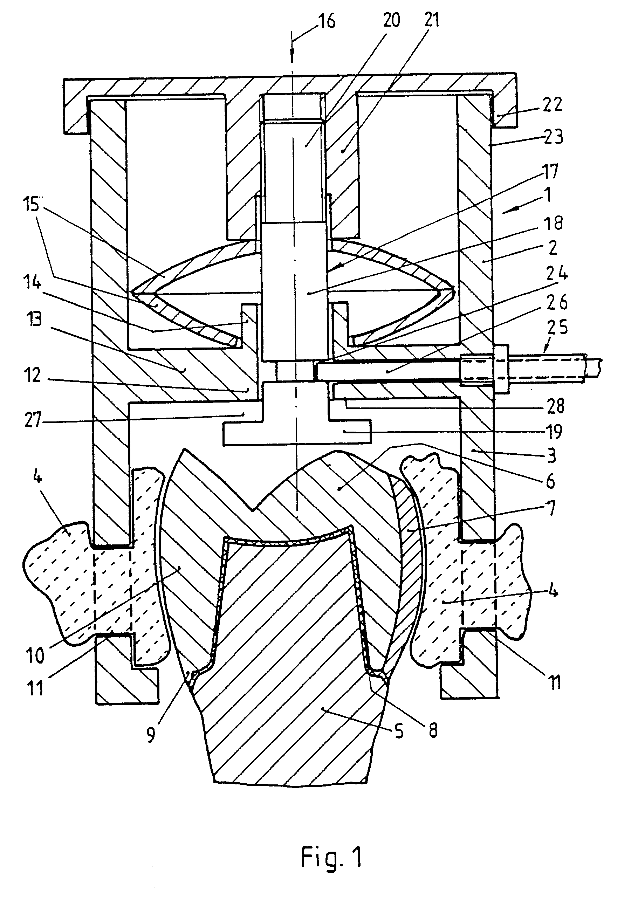

Bei der Ausführungsform gemäss Fig. 1 ist eine Einrichtung 1 zum Aufbringen einer Abzugskraft mit ihrem Gehäuse 2 auf einen Abzugsrahmen 3 aufgesetzt bzw. einstückig ausgebildet. Der Abzugsrahmen 3 trägt zwei Haltebacken 4, die in nicht zusammenhängenden Wandteilen untergebracht sind. Vorn und hinten ist der Abzugsrahmen 3 offen gestaltet, also in der Erstreckungsrichtung des Kiefers bzw. der Zähne. Es ist ein Zahnstumpf 5 dargestellt, auf den eine Krone 6 mit einer Verblendung 7 aufgesetzt und mit Hilfe eines Films 8 aus Befestigungszement befestigt ist. Wie ersichtlich greifen die Haltebacken 4 nicht im Bereich des Randes 9 der Krone 6 oder der Verblendung 7 an, sondern im Bereich der Mantelfläche 10; die Haltebacken 4 können hier je aus einem Massestück aus thermoplastischem Kunststoff bestehen, welches in Durchbrechungen 11 des Abzugsrahmens 3 gelagert und gehalten ist.

Die Einrichtung 1 besitzt im Bereich des Gehäuses 2 einen nach innen vorspringenden Rand 12 und eine Art Zwischenboden 13, in dessen Bereich mit Hilfe eines Kragens 14 mehrere Federn 15, die als Tellerfedern ausgebildet sind, gelagert sind.

In der Mitte konzentrisch zu der Einschubrichtung 16, also der Richtung, in der die Krone 6 auf den Zahnstumpf 5 aufgesetzt worden ist, ist ein Massegeschoss 17 in Form eines Bolzens 18 mit einem Kopf 19 begrenzt verschiebbar gelagert. Der Bolzen 18 besitzt einen Gewindeschaft 20, auf dem eine Mutter 21 mit entsprechendem Gegengewinde verschieden weit aufschraubbar ist. Die Mutter 21 besitzt einen Wulst 22, der das Gehäuse 2 überragt. An dieser Stelle kann das Gehäuse 2 Markierungen 23 tragen, so dass je nachdem, wie weit die Mutter 21 auf den Gewindeschaft 20 aufgeschraubt und damit die Feder 15 vorgespannt wird, eine entsprechende Anzeige der Vorspannkraft mit Hilfe der Markierungen 23 möglich ist. Es versteht sich, dass sich die Federn 15 auf dem Zwischenboden 13 abstützen und andererseits an der Mutter 21 zur Anlage kommen, so dass das Massegeschoss 17 von dieser Kraftquelle entgegengesetzt zur Einschubrichtung 16 beaufschlagt ist. Der Bolzen 18 weist eine umlaufende Nut 24 auf, in welche ein Auslöser 25 mit Hilfe eines Schiebers 26 eingreift, so dass die Teile unter Vorspannung der Federn 15 die in Fig. 1 dargestellte Lage einnehmen, bei der der Kopf 19 des Massegeschosses 17 einen Abstand 27 von dem vorspringenden Rand 12 einnimmt. Der Abstand 27 entspricht dem möglichen Hub des Massegeschosses 17 bei Freigabe durch den Auslöser 25 bzw. den Schieber 26, so dass somit eine Bewegungsbahn entgegengesetzt der Einschubrichtung 16 geschaffen ist, an deren Ende der Kopf 19 auf den vorspringenden Rand 12 nach Art eines Ambosses 28 aufschlägt und somit seine kinetische Energie schlagartig an den Zwischenboden 13 und somit an das Gehäuse 2, den Abzugsrahmen 3 und die Halteplatten 4 überträgt. Der Auslöser 25 kann nach Art eines Bowdenzuges — auf Zug oder auch auf Druck auslösbar — ausgestaltet sein.

Die Vorrichtung wird wie folgt gehandhabt. Zum Abziehen der Krone 6 ist es zunächst einmal erforderlich, die Haltebacken 4, beispielsweise durch Eintauchen in ein Wasserbad, so vorzuwärmen, dass ein plastischer Zustand des thermoplastischen Haltebackens jeweils erreicht wird. So vorgewärmt wird die Vorrichtung dann entsprechend der Einschubrichtung 16 auf die Krone 6 aufgeschoben, wobei die Haltebacken 4 an der Mantelfläche 10 jeweils gegenüberliegend zur Anlage kommen und der thermoplastische Kunststoff unter Nachbildung der entsprechenden Form erstarrt.

Vorher ist durch entsprechendes Verdrehen der Mutter 21 relativ zu dem Gewindeschaft 20 die für das Abziehen der Krone 6 geeignete Vorspannkraft auf die Federn 15 aufgebracht worden und durch Niederdrücken der Mutter 21 in Richtung der Einschubrichtung 16 der Schieber 26 des Auslösers 25 in die Nut 24 eingeschoben worden, so dass die Teile die Relativlage, wie in Fig. 1 dargestellt, einnehmen. Es versteht sich, dass diese Einstellarbeiten vorgenommen werden, wenn sich die Vorrichtung noch ausserhalb des Mundes befindet.

Nach dem Erhärten der thermoplastischen Masse der Haltebacken 4 wird der Auslöser 25 betätigt, also der Schieber 26 aus der Nut 24 herausgezogen, so dass die Kraft der Federn 15 das Massegeschoss 17 entgegengesetzt zur Einschubrichtung 16 mittig über der Krone 6 nach oben beaufschlagen. Das Massegeschoss 17 fliegt nach oben bis am Ende der Bewegungsbahn der Kopf 19 auf den Amboss 28 schlagartig auftrifft. Damit ist die Bewegungsbahn des Massegeschosses 17 beendet und die kinetische Energie des Massegeschosses 17 wird als schlagartiger Impuls letztlich auf die Krone 6 übertragen, so dass mit sehr kurzer Einwirkungszeit die Haltekraft des Films 8 des Befestigungszementes überschritten wird. Damit ist die Krone 6 von dem Zahnstumpf 5 gelockert. Die Krafteinwirkung erfolgte nur sehr kurzzeitig, unter Aufwendung einer relativ kleinen Masse des Massegeschosses 17 und entgegengesetzt zur Einschubrichtung 16 wirkend, wobei die beiden Haltebacken 4 gegenüberliegend an der Krone 6 angreifen.

Damit wird eine geradlinige Abziehbewegung entgegengesetzt zur Einschubrichtung 16 erzielt.

Es versteht sich, dass die Federn 15 gegen andere Federn, also solche mit anderer Vorspannkraft austauschbar sind, wenn der übertragbare Schlagimpuls veränderten Bedingungen angepasst werden soll. Dies ist dann der Fall, wenn der von den Markierungen 23 überstrichene Bereich der einen Feder 15 nicht ausreichend sein sollte. Es versteht sich weiterhin, dass auch die Möglichkeit gegeben ist, die Mutter 21 letztlich unverdrehbar gegenüber dem Gewindeschaft 20 mit diesem zu verbinden, so dass eine solche Vorrichtung hinsichtlich der aufbringbaren Kraftquelle nicht einstellbar ist, sondern reproduzierbar immer die gleiche Vorspannkraft aufweist und abgibt. Es können dann Einrichtungen mit verschieden starken Kraftquellen hergestellt und eingesetzt werden, die je nach Anwendungsfall auszuwählen sind.

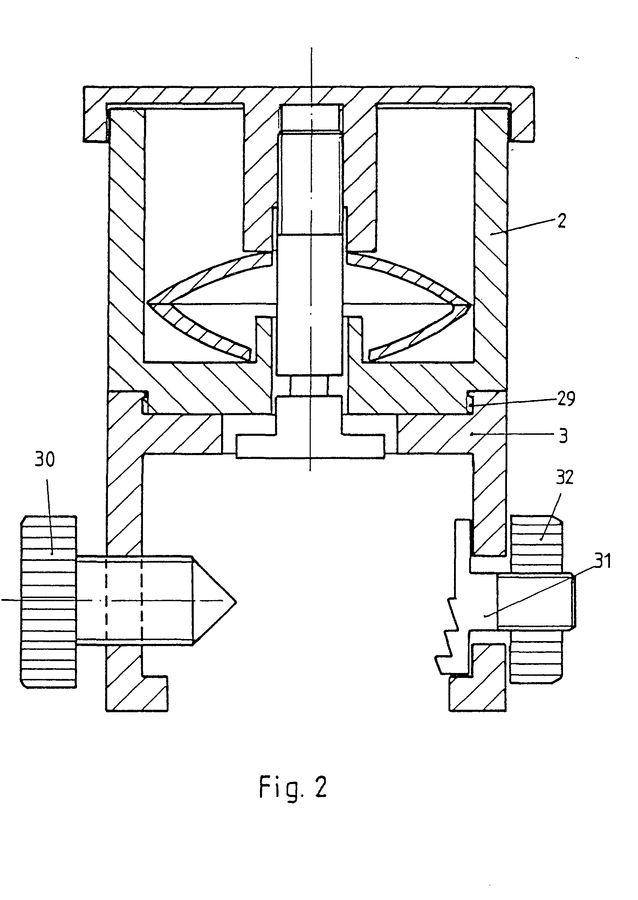

Fig. 2 zeigt eine im Prinzip ganz ähnlich ausgebildete Vorrichtung, die jedoch horizontal geteilt ist, d.h. das Gehäuse 2 und der Abzugsrahmen 3 bilden hier nicht ein einstückiges Materialteil, sondern mit Hilfe eines Gewindes 29 sind sie miteinander verbindbar. Damit ist sichergestellt, dass verschiedene Einrichtungen 1 mit verschieden ausgebildeten Abzugsrahmen 3 jeweils wahlweise kombiniert werden können. Hierbei ist insbesondere daran gedacht, den Abzugsrahmen 3 nicht nur so schmal auszubilden, dass er einem Zahn zugeordnet ist. Beim Abziehen einer Brücke, die sich über mehrere Zähne erstreckt, wird der Abzugsrahmen 3 entsprechend breit oder lang ausgebildet, wobei jeweils verschiedene Paare von Haltebacken 4 hintereinander vorgesehen sind. Diese Haltebacken 4 können aus thermoplastischen Massestücken (Fig. 1) bestehen oder auch aus Rändelschrauben 30 oder auch aus Formstücken 31 (Fig. 2). Bei mehrteiliger Ausbildung ist nicht nur die Verbindung der beiden Teile über ein Gewinde 29 möglich. Auch eine Steckverbindung bietet sich hier dem Fachmann an, und zwar beispielsweise auch derart, dass sich der Abzugsrahmen 3 beispielsweise über die Entfernung von drei nebeneinander denkbaren Zahnstümpfen erstreckt, während auf der Oberseite eines solchen Abzugsrahmens 3 z.B. nur zwei Einrichtungen 1 aufschiebbar sind, die für eine gleichmässige Verteilung der Abzugskraft über die Länge des Abzugsrahmens 3 ausreichend sein können. Die verschiedenen Variantionen sind damit angedeutet.

Auch die Haltebacken 4 können entsprechend variiert werden, wobei es möglich ist, die Durchbrechungen 11 mit entsprechendem Gewinde zu versehen, um die Rändelschrauben 30 entsprechend weit einzuschrauben. Es versteht sich, dass an der Krone 6 in Verbindung damit entsprechende Vertiefungen vorgesehen sein müssen, um die erforderliche Abzugskraft zu übertragen. Diese Vertiefungen sind aber nicht im Bereich des Randes 9 vorgesehen, sondern ebenfalls im Bereich der Mantelfläche 10. Auch ein Formstück 31 lässt sich in den Durchbrechungen 11 mit Hilfe von Kontermuttern 32 festlegen und innerhalb der Durchbrechung 16 verschieden plazieren und anordnen.

Die Funktion der Vorrichtung gemäss Fig. 2 entspricht derjenigen nach Fig. 1.

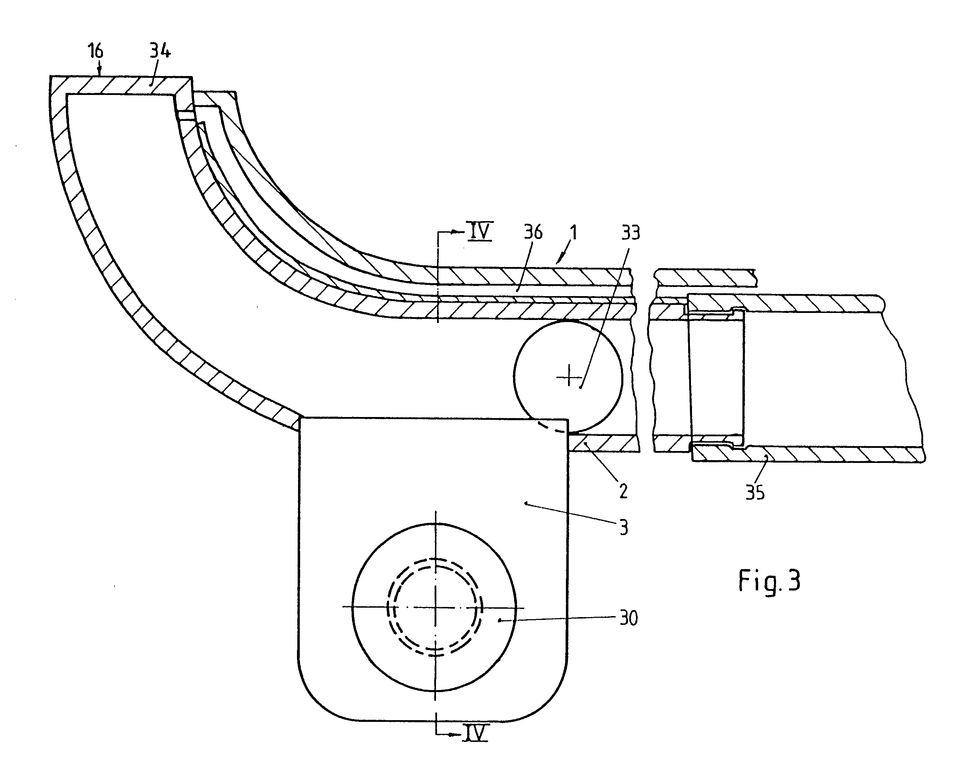

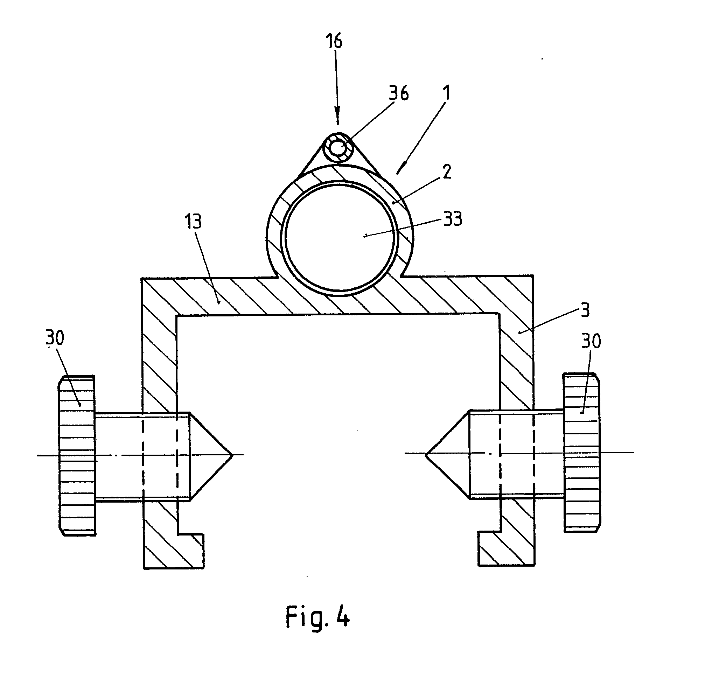

In den Fig. 3 und 4 ist eine weitere Ausführungsform dargestellt. Der Abzugsrahmen 3 ist hier in Seitenansicht ersichtlich, wobei die Draufsicht auf die Rändelschraube 30 die Lage der somit verwirklichten Haltebacken 4 erkennen lässt. Das Gehäuse 2 der Einrichtung 1 besteht im wesentlichen aus einem pfeifenartig gebildeten Rohr, in dem sich eine Kugel 33 als Massegeschoss 17 begrenzt verschieblich bewegt. Diese Bewegungsbahn entsprechend der Krümmung des Rohres bzw. des Gehäuses endet jedenfalls entgegengesetzt zu der Einschubrichtung 16, wobei der Amboss 28 von einem Steg 34 gebildet ist, in welchem sich ein oder mehrere Öffnungen für den Austritt der von der Kugel 33 in dem Gehäuse 2 verdrängten Luft befinden. Über einen Schlauchanschluss 35 kann etwa über ein nicht dargestelltes Ventil gezielt Druckluft auf die Kugel 33 geleitet werden, so dass diese beschleunigt wird und ihre gekrümmte Bewegungsbahn durchläuft und schliesslich ihre kinetische Energie auf den Steg 34 abgibt. Auch dabei wird wiederum entgegengesetzt zur Einschubrichtung 16 schlagartig die entsprechende Energie übertragen. Es versteht sich, dass das Ende der pfeifenartigen Bewegungsbahn und somit der Steg 34 nicht unbedingt seitlich versetzt zu der Achse der Rändelschraube 30 angeordnet sein muss oder sollte, sondern vorteilhaft über dieser Achse angeordnet ist, damit die übertragene Schlagkraft auch genau über der abzuziehenden Krone 6 wirksam wird. Ein geringfügiger Versatz schadet hier nicht, da die Vorrichtung letztendlich von der Bedienungsperson noch gehalten wird. Somit wird auch hier eine Kippbewegung und damit eine Beschädigung des Zahnersatzes vermieden. Die Vorrichtung kann im Bereich des Gehäuses 2 eine zweite Druckluftleitung 36 aufweisen, die im Bereich des Steges 34 in die Bewegungsbahn der Kugel 33 einmündet und somit — verständlicherweise mit erheblich gemindertem Druck — den Rücklauf der Kugel 33 in ihre Ausgangsstellung beaufschlagt. Die Steuerung der beiden Druckluftleitungen kann somit wechselseitig erfolgen oder auch auf andere Weise.

**Patentansprüche**

1. Vorrichtung zum Entfernen von Kronen (6), Brücken oder dgl. von Zahnstümpfen (5) unter Zerstörung des Befestigungszementes (8), mit einem Abzugsrahmen (3), an dem zwei gegenüberliegend angeordnete, zum Angriff an der Mantelfläche der Krone, Brücke oder dgl. ausgebildete Haltebacken (4) vorgesehen sind, und mit einer Einrichtung (1) zum Aufbringen einer entgegen der Einschubrichtung (16) der Krone auf den Zahnstumpf wirksamen Abzugskraft auf den Abzugsrahmen (3), dadurch gekennzeichnet, dass die Einrichtung (1) zum Aufbringen der Abzugskraft ein beweglich gelagertes Massegeschoss (17) aufweist, dass das Massegeschoss (17) in einer Bewegungsbahn geführt ist, die zumindest an ihrem Ende, an dem das Massegeschoss auf einen dort vorgesehenen Amboss (28) auftrifft, in einer Richtung entgegen der Einschubrichtung (16) verläuft, dass das Massegeschoss (17) von einer auslösbaren Kraftquelle beaufschlagt ist und dass der Amboss (28) mit dem Abzugsrahmen (3) und den Haltebacken (4) verbunden ist.

2. Vorrichtung nach Anspruch 1, dadurch gekennzeichnet, dass die Kraftquelle hinsichtlich der Beschleunigung des Massegeschosses (17) einstellbar ausgebildet ist.

3. Vorrichtung nach Anspruch 1 und 2, dadurch gekennzeichnet, dass das Massegeschoss (17) einen Bolzen (18) mit angeformtem Kopf (19) aufweist, der geradlinig entgegen der Einschubrichtung (16) in einem Gehäuse (2) geführt und auf der als mechanische Feder (15) ausgebildeten Kraftquelle abgestützt ist, dass ein Auslöser (25) zur Freigabe der Kraftquelle auf den Bolzen (18) vorgesehen ist, und dass der Amboss (28) aus einem den Bolzen (18) umgebenden Rand (12) des Gehäuses (2) besteht.

4. Vorrichtung nach Anspruch 3, dadurch gekennzeichnet, dass der Bolzen (18) einen Gewindeschaft (20) und eine zugehörige Mutter (21) zur Einstellung der Vorspannung der Kraftquelle aufweist.

5. Vorrichtung nach Anspruch 3 und 4, dadurch gekennzeichnet, dass der Bolzen (18) eine umlaufende Nut (24) aufweist, in die der als Schieber (26) ausgebildete Auslöser (25) eingreift.

6. Vorrichtung nach Anspruch 3 bis 5, dadurch gekennzeichnet, dass der die Haltebacken (4) tragende Abzugsrahmen (3) und das Gehäuse (2) der Einrichtung (1) zum Aufbringen der Abzugskraft als getrennte Teile miteinander verbindbar sid.

7. Vorrichtung nach Anspruch 1 und 2, dadurch gekennzeichnet, dass das Massegeschoss (17) als Kugel (33) ausgebildet ist, die in einer pfeifenartigen Bewegungsbahn geführt und von Druckluft als Kraftquelle angetrieben ist, und dass der Amboss (28) einen am Ende der Bewegungsbahn angeordneten Steg (34) aufweist.

8. Vorrichtung nach Anspruch 1 bis 7, dadurch gekennzeichnet, dass mehr als ein Paar Haltebacken (4) in einem gemeinsamen Abzugsrahmen (3) vorgesehen sind, und dass wahlweise eine oder mehrere Einrichtungen (1) zum Aufbringen der Abzugskraft mit ihren Gehäusen (2) auf den Abzugsrahmen (3) aufschiebbar sind.

9. Vorrichtung nach Anspruch 8, dadurch gekennzeichnet, dass bei Verwendung mehrerer Einrichtungen (1) zum Aufbringen der Abzugskraft deren Auslöser (25) zeitgleich betätigbar sind.

**Claims**

1. Device for the removal of crowns (6), bridges or the like from tooth stumps (5) with destruction of the fixation cement (8), having a pull-off frame (3) on which there are provided two holding clamps (4) arranged opposite each other and designed to grip the circumferential surface of the crown, bridge or the like, and having an arrangement (1) for applying, to the pull-off frame (3), a pulling-off force acting counter to the insertion direction (16) of the crown onto the tooth stump, characterized in that the arrangement (1) for applying the pulling-off force has a movably mounted mass projectile (17), in that the mass projectile (17) is guided in a movement track which, at least at its end at which the mass projectile strikes an anvil (28) provided there, runs in a direction counter to the insertion direction (16), in that the mass projectile (17) is acted upon by a releasable power source, and in that the anvil (28) is connected to the pull-off frame (3) and the holding clamps (4).

2. Device according to Claim 1, characterized in that the power source with respect to the acceleration of the mass projectile (17) is designed to be adjustable.

3. Device according to Claims 1 and 2, characterized in that the mass projectile (17) has a bolt (18) with integrally formed head (19), which is guided in a housing (2) in a straight line counter to the insertion direction (16) and is supported on the power source designed as a mechanical spring (15), in that a trigger (25) is provided for the release of the power source on the bolt (18), and in that the anvil (28) consists of an edge (12) of the housing (2) surrounding the bolt (18).

4. Device according to Claim 3, characterized in that the bolt (18) has a threaded shaft (20) and an associated nut (21) for setting the pre-tensioning of the power source.

5. Device according to Claims 3 and 4, characterized in that the bolt (18) has a circumferential groove (24) into which the trigger (25) designed as a slide (26) engages.

6. Device according to Claims 3 to 5, characterized in that the pull-off frame (3), bearing the holding clamps (4), and the housing (2) of the arrangement (1) for applying the pulling-off force can be connected to each other as separate parts.

7. Device according to Claims 1 and 2, characterized in that the mass projectile (17) is designed as a ball (33) which is guided in a pipe-like movement track and is driven by compressed air as the power source, and in that the anvil (28) has a plate (34) arranged at the end of the movement track.

8. Device according to Claims 1 to 7, characterized in that more than one pair of holding clamps (4) are provided in a common pull-off frame (3), and in that alternatively one or more arrangements (1) for applying the pulling-off force can be pushed with their housings (2) onto the pull-off frame (3).

9. Device according to Claim 8, characterized in that, when using several arrangements (1) for applying the pulling-off force, their triggers (25) can be actuated isochronally.

**Revendications**

1. Dispositif pour enlever une couronne (6), un bridge ou analogue d'un chicot dentaire (5) en détruisant le ciment de fixation (8), avec un cadre d'extraction (3) sur lequel sont prévus deux mors (4) disposés face à face, conformés pour faire prise sur la surface extérieure de la couronne, du bridge ou analogue, et avec un mécanisme (1) pour exercer sur le cadre d'extraction (3) une force d'extraction agissant en sens opposé au sens d'insertion (16) de la couronne sur le chicot dentaire, caractérisé en ce que le mécanisme (1) d'application de la force d'extraction présente une masselotte (17) mobile guidée, en ce que la masselotte (17) est guidée dans une piste de circulation qui s'étend, tout au moins dans sa partie terminale où la masselotte vient recontrer une enclume (28) prévue à cet endroit, dans un sens opposé au sens d'insertion (16), en ce que la masselotte (17) est lancée au moyen d'une source de force pouvant être déclenchée, et en ce que l'enclume (28) est réunie avec le cadre d'extraction (3) et avec les mors (4).

2. Dispositif selon la revendication 1, caractérisé en ce que la source de force est constituée de manière à être réglable en ce qui concerne l'accélération de la masselotte (17).

3. Dispositif selon les revendications 1 et 2, caractérisé en ce que la masselotte (17) présente un boulon (18) avec une tête (19) formée sur ce boulon, lequel est guidé en ligne droite en sens opposé au sens d'insertion (16) dans un boîtier (2) et sur lequel s'appuie la source de force constituée sous la forme d'un ressort mécanique (15), en ce qu'il est prévu un déclencheur (25) pour libérer l'action de la source de force sur le boulon (18), et en ce que l'enclume (28) consiste en un rebord (12) du boîtier (2) entourant le boulon (18).

4. Dispositif selon la revendication 3, caractérisé en ce que le boulon (18) présente une tige filetée (20) et un écrou (21) correspondant pour le réglage de la tension préalable de la source de force.

5. Dispositif selon les revendications 3 et 4, caractérisé en ce que le boulon (18) présente une gorge périphérique (24) dans laquelle s'engage le déclencheur (25) conformé en tirette (26).

6. Dispositif selon les revendications 3 à 5, caractérisé en ce que le cadre d'extraction (3) portant les mors (4) et le boîtier (2) du mécanisme (1) pour l'application de la force d'extraction sont susceptibles d'être reliés ensemble en tant que pièces séparées.

7. Dispositif selon les revendications 1 et 2, caractérisé en ce que la masselotte (17) est sous la forme d'une bille (33) qui est guidée dans une piste de circulation en forme de pipe, et est actionnée par de l'air comprimé en tant que source de force, et en ce que l'enclume (28) présente une entretoise (34) disposée à l'extrémité de la piste de circulation.

8. Dispositif selon les revendications 1 à 7, caractérisé en ce qu'il est prévu plus d'une paire de mors (4) dans un cadre d'extraction (3) commun, et en ce qu'un ou plusieurs mécanismes (1) pour l'application de la force d'extraction sont susceptibles de coulisser au choix sur le cadre d'extraction (3).

9. Dispositif selon la revendication 8, caractérisé en ce que, lors de l'utilisation de plusieurs mécanismes (1) d'application de la force d'extraction, leurs déclencheurs (25) sont susceptibles d'être actionnés simultanément.

Fig. 1

Fig. 2

Fig.3

EP 0 232 276 B1

Fig. 4